# EUROPÄISCHE PATENTSCHRIFT

(11) **EP 1 363 141 B1**
(45) Veröffentlichungstag und Bekanntmachung des Hinweises auf die Patenterteilung: **03.01.2007**
(21) Anmeldenummer: 03008605.2
(22) Anmeldetag: 15.04.2003
(51) Int. Cl.: G02B 1/00, G02B 1/10, G02B 5/20, G02B 5/28

(54) **Infrarot reflektierendes Material**
Infrared reflecting material
Matériau réfléchissant dans l'infrarouge

(30) Priorität: 14.05.2002 DE 10221518
(43) Veröffentlichungstag der Anmeldung: 19.11.2003
(73) Patentinhaber: Merck Patent GmbH, 64293 Darmstadt (DE)
(72) Erfinder: Rosenberger, Silvia, 64289 Darmstadt (DE); Olbers, Guido, 64285 Darmstadt (DE); Heinz, Dieter, 64646 Heppenheim (DE)

(56) Entgegenhaltungen:
- EP-A- 0 548 822
- EP-A- 1 059 338
- DE-A- 19 618 569
- US-A- 3 887 744
- US-A- 4 090 773

## Beschreibung

Die Erfindung betrifft ein flächiges Material, das im sichtbaren Bereich des Sonnenlichtes eine hohe Durchlässigkeit und im NIR-Bereich eine hohe Reflexion besitzt. Diese Materialien werden eingesetzt, um in umbauten Räumen, beispielsweise Gebäuden, Fahrzeugen oder Gewächshäusern, zu hohe Temperaturen zu vermeiden und gleichzeitig eine große Helligkeit zu erzeugen.

EP 0 548 822 beschreibt einen lichtdurchlässigen IR-reflektierenden Körper, der aus einem Basismaterial aus Kunststoff und einer darauf haftenden Überzugsschicht besteht. Die Überzugsschicht enthält 20 bis 40 Gew.-% eines einschichtigen Interferenzpigmentes. Nachteilig bei diesem Körper ist, dass neben der NIR-Strahlung auch ein Teil des sichtbaren Lichtes reflektiert wird und dass das hindurchtretende Licht grün und das reflektierte Licht rot ist. Weiterhin geht durch die transluzente Überzugsschicht die Transparenz des Basismaterials verloren (Milchglaseffekt).

Aus der DE 2 709 562 ist eine Kunststofffolie zur Abschirmung von Pflanzen gegen Sonneneinstrahlung bekannt, die durchbrochen ist und mit einem weißen oder metallisch glänzenden Pigment oder mit einer weißen oder metallisch glänzenden Beschichtung versehen ist, so dass 10 bis 70 % des senkrecht auffallenden Lichtes durchgelassen werden.

Durch eine solche Kunststofffolie wird die Strahlung über den gesamten Wellenlängenbereich, d.h. sowohl im sichtbaren als auch im infraroten Bereich gleichmäßig reduziert.

Auf Gebäude angewandt, würde dies zu einer Verdunkelung von Innenräumen führen, was jedoch von Nachteil sein kann.

EP 1 059 338 beschreibt ein Mittel zur Beschichtung transparenter Flächen, wie sie für Gewächshäuser, Folienbauten, Lichtkuppeln, Dachfenster oder Dachabdeckungen verwendet werden, das im sichtbaren Bereich des Sonnenlichtes eine hohe Durchlässigkeit und im NIR-Bereich eine hohe Reflexion besitzt. Das Anstrichmittel besteht aus einem mehrschichtigen Interferenzpigment, bestehend aus einem transparenten Trägermaterial, das mit alternierenden Schichten aus einem Material mit niedriger Brechzahl und einem Material mit hoher Brechzahl beschichtet ist und einem polymeren, organischen Bindemittel. Auch durch diesen transluzenten, NIR-reflektierenden Anstrich geht die Transparenz des Basismaterials verloren.

US 3 887 744 beschreibt eine durchsichtige Platte, die auf ihrer Oberfläche teilweise mit Aluminium beschichtet ist, wodurch der prozentuale Durchgang des sichtbaren Lichts und der Infrarotstrahlen geregelt wird. Dabei sind entweder bestimmte Bereiche der Platte mit Aluminium beschichtet oder das Aluminium ist als Farbe durch Siebdruck aufgebracht. Bei dieser Art der Beschichtung sind zwar Einzelheiten der Umgebung aus dem umbauten Raum heraus erkennbar, Aluminium reflektiert aber nicht wellenlängenselektiv in Bezug auf das Sonnenspektrum. Das bedeutet, dass Aluminium im Gegensatz zu Interferenzpigmenten sowohl die NIR-Strahlung als auch das sichtbare Licht reflektiert, was zu einer Heiligkeitsverminderung im umbauten Raum führt.

Aufgabe der Erfindung ist es, ein NIR-reflektierendes Material bereitzustellen, durch welches Einzelheiten der Umgebung aus dem umbauten Raum heraus erkennbar sind, ohne dass das Reflexionsvermögen für die NIR-Strahlung im Vergleich zu herkömmlichen Beschichtungen mit Interferenzpigmenten vermindert ist.

Diese Aufgabe wird gemäß der Erfindung gelöst durch ein infrarot reflektierendes Material nach Anspruch 1.

Gegenstand der Erfindung ist weiterhin ein Verfahren zur Abschirmung eines umbauten Raumes gegen Infrarot-Licht nach Anspruch 12.

Ein weiterer Gegenstand der Erfindung ist die Verwendung des infrarot reflektierenden Materials für Gebäude, Fahrzeuge und Gewächshäuser.

Unter transparentem flächigen Material werden Platten und Formkörper aus Glas sowie Platten, Profile und Folien aus Kunststoff verstanden. Geeignete Kunststoffe sind Polyethylen mit niedriger oder hoher Dichte, Ethylen/Vinylacetat-Copolymer, Polyvinylidenchlorid, Polyvinylchlorid, Polycarbonat, Polymethacrylat oder Mischungen davon.

Interferenzpigmente, die im infrarot reflektierenden Material gemäß der Erfindung eingesetzt werden können, sind ein- oder mehrschichtig. Sie weisen im sichtbaren Bereich der Globalstrahlung eine höhere Transmission auf als im nahen Infrarot-Bereich (NIR), das heißt, ihr Transmissions- bzw. Reflexionsverhalten ist wellenlängenselektiv. Unter NIR-Bereich wird dabei ein Wellenlängenbereich von 780 bis 2500 nm verstanden.

Die Interferenzpigmente bestehen im allgemeinen aus einem transparenten Trägermaterial und einer Beschichtung aus Metalloxiden. Dieses Trägermaterial kann natürlicher oder synthetischer Glimmer, ein anderes Schichtsilikat, Glasplättchen, plättchenförmiges Siliciumdioxid oder Aluminiumoxid sein.

Bei den mehrschichtigen Pigmenten sind auf das Trägermaterial 3, 5, 7 oder mehr Schichten aus Metalloxiden, bevorzugt jedoch 3 Schichten, aufgetragen. Die erste Schicht besteht aus einem Material mit hoher Brechzahl, das beispielsweise aus TiO₂, ZrO₂, ZnO oder aus einem Gemisch aus diesen Oxiden sein kann. Bevorzugt sind farblose hochbrechende Metalloxide. Die zweite Schicht besteht aus einem Material mit niedriger Brechzahl, beispielsweise SiO₂ oder Al₂O₃. Die dritte Schicht besteht wiederum aus einem Material mit hoher Brechzahl, welches gleich oder verschieden zum Material der ersten Schicht ausgewählt werden kann. Farblose hochbrechende Metalloxide sind bevorzugt. Auf dieses Schichtpaket kann wahlweise noch eine oder mehrere Schichtfolgen aus hoch- und niedrigbrechenden Materialien, oder aber eine Schutzschicht aufgebracht sein. Die Herstellung der Pigmente und ihre Eigenschaften sind in DE 196 18 569 näher beschrieben.

Es werden nur solche mehrschichtigen Interferenzpigmente eingesetzt, die im sichtbaren Bereich der Globalstrahlung eine höhere Transmission aufweisen als im NIR-Bereich. Diese können anhand ihrer Reflexionsspektren ausgewählt werden. Dabei sollte im Wellenlängenbereich von 780 bis 2500 nm ein Transmissionsminimum auftreten.

Mehrschichtige Interferenzpigmente, die die oben genannten Eigenschaften besitzen, sind beispielsweise Iriodin® SHR 870 und Iriodin® SHR 9870, die auf einem Träger aus Glimmer eine Schichtenfolge TiO₂ - SiO₂ - TiO₂ aufweisen.

Bei den einschichtigen Interferenzpigmenten besteht die Beschichtung aus transparenten, hochbrechenden Metalloxiden wie beispielsweise Titandioxid oder Zirkondioxid. Auch hier sind farblose Metalloxide bevorzugt.

Iriodin® SHR 875 und Iriodin® SHR 9875 sind einschichtige Interferenzpigmente auf Basis von Glimmer mit einer Beschichtung aus Titandioxid, deren spektrale Eigenschaften durch eine gute Transmission im sichtbaren Bereich gekennzeichnet sind und die speziell ein Transmissionsmaximum im Maximum der Empfindlichkeit des menschlichen Auges haben. Ihr Transmissionsminimum liegt im NIR-Bereich.

Das erfindungsgemäße infrarot reflektierende Material kann das Interferenzpigment in einer Beschichtung auf dem transparenten flächigen Material oder in das transparente flächige Material eingearbeitet enthalten.

Erfindungsgemäß ist dabei lediglich ein Teil der Gesamtfläche des transparenten flächigen Materials mit der die Interferenzpigmente enthaltenden Beschichtung bedeckt oder die Interferenzpigmente sind nur in Teilen des transparenten flächigen Materials enthalten.

Der Bedeckungsgrad der Gesamtfläche beträgt dabei im allgemeinen 30 - 80 %, bevorzugt 60 - 70 %, bezogen auf die gesamte transparente Fläche.

Die Beschichtung kann in Form einer Beschichtungslösung, welche das Interferenzpigment und mindestens ein organisches oder anorganisches Bindemittel sowie gegebenenfalls weitere Zusätze enthält, auf die transparente Fläche aufgebracht und anschließend durch Trocknung verfestigt werden. Geeignete organische Bindemittel sind beispielsweise Alkydharze, Vinylharze, Epoxidharze, Polyurethane, Acrylate, Polycarbonate, Polyester, Polyethylenglykol und ihre Copolymere.

Als anorganische Bindemittel kommen insbesondere solche in Betracht, die sich für Frittensysteme eignen, beispielsweise natürliche oder synthetische Silikate und deren Gemische mit verschiedenen Metalloxiden.

Als weitere Zusätze werden solche verwendet, die in der Beschichtungstechnologie üblicherweise eingesetzt werden, wie zum Beispiel Verdickungsmittel, Dispergierhilfsmittel, Netzmittel und Plastifizierungsmittel sowie Lösungsmittel wie Wasser, Ester, Ketone, Alkohole, Aromaten oder dergleichen.

Die Beschichtungslösung enthält 10 bis 40 Gew.-%, bevorzugt 15 bis 30 Gew.-%, Interferenzpigment, bezogen auf das Gesamtgewicht der Beschichtungslösung.

Es ist vorteilhaft, wenn der Teil der transparenten Fläche, welcher von der Beschichtung bedeckt ist, gleichmäßig über die Gesamtfläche verteilt ist, also aus kleinen Einzelflächen besteht, denen unbedeckte Flächen benachbart sind. Die bedeckten Flächen liegen vorzugsweise in Form von Punkten, Strichen, grafischen Mustern, alphanumerischen Zeichen oder in unregelmäßigen Flächenformen vor, welche gleichmäßig über die Gesamtfläche verteilt sind.

Dies wird über gängige Auftragsverfahren wie z.B. Bedrucken, Sprühen, Rakeln, Rollen, Streichen, jeweils mit oder ohne Masken oder Schablonen, oder ähnliches erreicht.

Vorzugsweise wird die Beschichtung jedoch im Druckverfahren auf das transparente flächige Material aufgebracht.

Neben dem Interferenzpigment enthält die hierzu erforderliche Druckfarbe die für Druckfarben üblichen Inhaltsstoffe, wie die oben bereits aufgeführten Bindemittel und Zusätze.

Als Bindemittel werden vorteilhafterweise Materialien ausgewählt, welche für Glimmerpigmente und Frittensysteme geeignet sind, wobei unter Frittensystemen Druckfarben zu verstehen sind, die in das transparente flächige Material eingebrannt werden können. Zur Anpassung der Druckfarbe an den jeweiligen Untergrund können noch weitere bekannte Additive zugesetzt werden.

So kann mit der Zugabe von etwa 5 Gew.-% einer Acrylpolymerdispersion beispielsweise eine bessere Haftung auf Glas erzielt werden.

Als besonders geeignet für das Aufbringen der Beschichtung hat sich das Siebdruckverfahren erwiesen.

Unter Anwendung dieses Verfahrens wird bei der Herstellung des erfindungsgemäßen infrarot reflektierenden Materials ein Negativ mit dem gewünschten Bedeckungsgrad, worunter das Verhältnis von beschichteter Fläche zur Gesamtfläche verstanden wird, durch ein photographisches Verfahren hergestellt, wie es im allgemeinen zum Drucken verwendet wird. Unter Verwendung dieses Negativs wird die Druckfarbe auf das transparente flächige Material aufgedruckt. Beim Siebdruckverfahren wird ein Raster erzeugt, mit dessen Größe und dem Durchmesser der Rasterpunkte der Bedeckungsgrad der transparenten Fläche eingestellt werden kann.

Die für den Siebdruck verwendeten Siebe müssen der Größe der Pigmentpartikel, die im allgemeinen im Bereich von 5 - 100 um liegt, angepasst werden. Auf Grund der besseren Selektivität der NIR Reflexion werden vorteilhafterweise Pigmente eingesetzt, deren Partikelgrößen im Bereich der Feinfraktionen liegen. Beispielhaft sind hier Partikelgrößen von 5 - 25 µm für einschichtige Pigmente und von 10 - 60 µm für mehrschichtige Pigmente zu nennen.

Eine weitere Ausführungsform der Erfindung besteht darin, dass die Beschichtung in Form einer Beschichtungslösung, welche ebenfalls die oben genannten Bestandteile enthält, auf ein weiteres transparentes flächiges Material, vorzugsweise auf einen transparenten Kunststoff, aufgebracht und anschließend durch Trocknung verfestigt wird. Besonders eignen sich hierfür Platten und Folien aus Polyethylen, Ethylen/Vinylacetat-Copolymer, Polyvinylidenchlorid, Polyvinylchlorid, Polycarbonat, Polymethacrylat oder Mischungen davon.

Die Beschichtungslösung kann dabei vollflächig auf das transparente, flächige Material aufgebracht und anschließend durch Trocknung verfestigt werden.

Nach der Trocknung der Beschichtungslösung wird dann das beschichtete transparente flächige Material perforiert, so dass nur noch ein Teil der Gesamtfläche von der Beschichtung, die das Interferenzpigment enthält, bedeckt ist. Dadurch liegen in dem flächigen Material flächige Aussparungen vor.

Der Teil der Gesamtfläche, welcher von der Beschichtung bedeckt ist, beträgt im allgemeinen 30 - 80 %, vorzugsweise 60 - 70 % der gesamten transparenten Fläche.

Das heißt, dass das transparente flächige Material einen Perforationsgrad von 20 - 70 %, insbesondere von 30 - 40 %, aufweist.

Die Perforation kann mit allgemein bekannten Perforationstechniken, wie Stanzverfahren, Flammenperforation, Laserstrahltechniken, Ultraschall- oder Hochfrequenzverfahren und dergleichen erfolgen.

Die Perforation ist dabei vorteilhafterweise gleichmäßig über die Gesamtfläche verteilt und kann in Form von Mustern oder alphanumerischen Zeichen vorliegen.

In einer weiteren Ausführungsform der Erfindung wird ein Interferenzpigment in das transparente flächige Material, welches vorzugsweise aus Platten oder Folien aus Polyethylen, Ethylen/Vinylacetat-Copolymer, Polyvinylidenchlorid, Polyvinylchlorid, Polycarbonat, Polymethacrylat oder Mischungen daraus besteht, eingearbeitet.

Dabei werden die zur Herstellung der transparenten flächigen Materialien benötigten Ausgangsmaterialien mit den Interferenzpigmenten gemischt. Anschließend werden die transparenten flächigen Materialien in bekannter Weise, zum Beispiel durch Extrusion oder Gießen, hergestellt.

Das Interferenzpigment ist in einer Konzentration von 5 - 30 Gew.-%, bevorzugt von 8 - 15 Gew.-%, bezogen auf das Gesamtgewicht, in dem transparenten flächigen Material enthalten.

Wie bereits vorab dargestellt, wird das transparente flächige Material anschließend perforiert, so dass 30 - 80 % der Gesamtfläche, vorzugsweise 60 - 70 % der Gesamtfläche, das Interferenzpigment enthalten.

Vorteilhafterweise ist die Perforation gleichmäßig über die gesamte Fläche verteilt und kann in Form von Mustern oder alphanumerischen Zeichen vorliegen.

Bei jeder der vorgenannten Ausführungsformen der Erfindung kann der stete Wechsel von bedeckten und unbedeckten Flächen vom menschlichen Auge als einheitliche Fläche wahrgenommen werden, bei der die bedeckten Flächen vom Gehirn ausgeblendet und die dadurch fehlenden Bildpunkte beim Durchsehen durch die transparenten Flächen ersetzt werden. Auf diese Weise hat der sich im umbauten Raum befindliche Betrachter den Eindruck einer ungehinderten Sicht nach außen.

Verglasungen, die mit einem infrarot reflektierenden Material gemäß der vorliegenden Erfindung versehen sind, weisen ein Verhältnis von Licht-transmissionsgrad zu solarem Transmissionsgrad von größer als 1 auf. Während in die Berechnung des solaren Transmissionsgrades die relative spektrale Verteilung der Sonneneinstrahlung einbezogen wird, berücksichtigt die Bestimmung des Lichttransmissionsgrades auch das durchschnittliche Helligkeitsempfinden des menschlichen Auges. Nähere Einzelheiten zur Bestimmung dieser Werte sind in der DIN EN 410 ausgeführt.

Das Interferenzpigment ist in einer Konzentration von 15 bis 50 Gew.-%, bevorzugt 20 bis 35 Gew.-%, bezogen auf das Gesamtgewicht der Beschichtung, in der Beschichtung enthalten.

Diese hohe Pigmentkonzentration führt zu einer sehr hohen Reflexion im NIR-Bereich an den beschichteten Teilflächen. Da das Reflexionsverhalten einer Fläche als Integral der Reflexion über die Gesamtfläche bestimmt wird, kann für die Gesamtfläche eine ebenso hohe Reflexion der NIR-Strahlung erzielt werden wie bei einer vollflächigen Beschichtung gemäß dem Stand der Technik, ohne jedoch eine eingeschränkte Sicht hinnehmen zu müssen.

Auf diese Weise wird der Wärmeanteil der solaren Strahlung selektiv reflektiert und die Innentemperatur in umbauten Räumen auch bei hoher Sonneneinstrahlung vergleichsweise niedrig gehalten, ohne dass es zu einer erheblichen Verdunkelung oder Sichteinschränkung im Raum kommt.

Bei dem erfindungsgemäßen Verfahren wird ein umbauter Raum, welcher Flächen, die für einfallendes Licht transparent sind, aufweist, gegen Infrarot-Licht abgeschirmt, indem ein infrarot reflektierendes Material auf einen Teil der für einfallendes Licht transparenten Fläche des Raumes aufgebracht wird, wobei das Material eine Beschichtung umfasst, die mindestens ein Interferenzpigment enthält, das im sichtbaren Bereich der Globalstrahlung eine höhere Transmission aufweist als im NIR-Bereich.

Unter Flächen, die für einfallendes Licht transparent sind, werden hier Flächen oder Formkörper aus Glas, transparenten Kunststoffen oder anderen festen, transparenten Materialien verstanden, die im allgemeinen eingesetzt werden, um in umbauten Räumen den Einfall von natürlichem Licht zu ermöglichen, also Fenster, Türen, Lichtkuppeln, Dachfenster, Dachabdeckungen und dergleichen.

Das erfindungsgemäße infrarot reflektierende Material wird dabei entweder auf bereits vorhandene Flächen, die für einfallendes Licht transparent sind, aufgebracht, oder es bildet diese.

So ist es beispielsweise möglich, dass ein erfindungsgemäßes Material, welches aus einer Glasplatte besteht, die auf Teilflächen mit einer Beschichtung versehen ist, welche ein Interferenzpigment enthält, das im sichtbaren Bereich der Globalstrahlung eine höhere Transmission aufweist als im NIR-Bereich, in einem umbauten Raum als Fläche eingesetzt wird, die für einfallendes Licht transparent ist.

Ebenso kann eine bereits vorhandene unbeschichtete Glasfläche, zum Beispiel an einem Gebäude, mit einer Folie oder Platte aus Kunststoff versehen werden, welche teilflächig das oben genannte Interferenzpigment entweder in einer Beschichtung oder eingearbeitet enthält.

Für den Fall, dass der umbaute Raum nicht gegen Nässe und witterungsbedingte Einflüsse geschützt werden muss, können die letztgenannten Platten oder Folien ebenfalls allein als infrarot reflektierendes Material aufgebracht werden.

Das erfindungsgemäße infrarot reflektierende Material wird für Fassaden und Dachabdeckungen, beispielsweise für Lichtkuppeln, sowie zur Verglasung von Türen und Fenstern von Gebäuden verwendet. Es kann aber auch für Fahrzeuge, beispielsweise für Straßenbahnen, eingesetzt werden. Die Vielfalt der einsetzbaren transparenten flächigen Materialien sowie der verschiedenen Technologien für das Aufbringen der Beschichtung gestattet dabei Ausführungsformen, die an den jeweiligen Verwendungszweck in idealer Weise angepasst werden können.

In allen Fällen wird eine übermäßige Erwärmung des umbauten Raumes durch starke Sonneneinstrahlung vermieden, wodurch das erfindungsgemäße infrarot reflektierende Material auch für Gewächshäuser einsetzbar ist. Durch die nur teilweise Beschichtung des transparenten, flächigen Materials ist es möglich, Einzelheiten der Umgebung aus dem Innenraum heraus deutlich zu erkennen.

Die nachfolgenden Beispiele sollen die Erfindung erläutern, ohne sie jedoch zu beschränken.

### Beispiel 1:

Aus einem Gemisch aus 85 Gew. % eines lösemittelhaltigen, für den Siebdruck geeigneten Bindemittels (PLN/093 der Fa. Pröll, Weißenburg) und 15 Gew. % Iriodin® SHR 870/9870 (Verkaufsprodukt der Fa. Merck KGaA, Darmstadt) wird eine Siebdruckfarbe hergestellt, welche mit einer Flachbett-Siebdruckmaschine der Fa. Atma über ein 52T Flachbettsieb auf eine PET-Folie gedruckt wird. Über ein Punkteraster wird dabei ein Bedeckungsgrad der Fläche von 50% eingestellt.

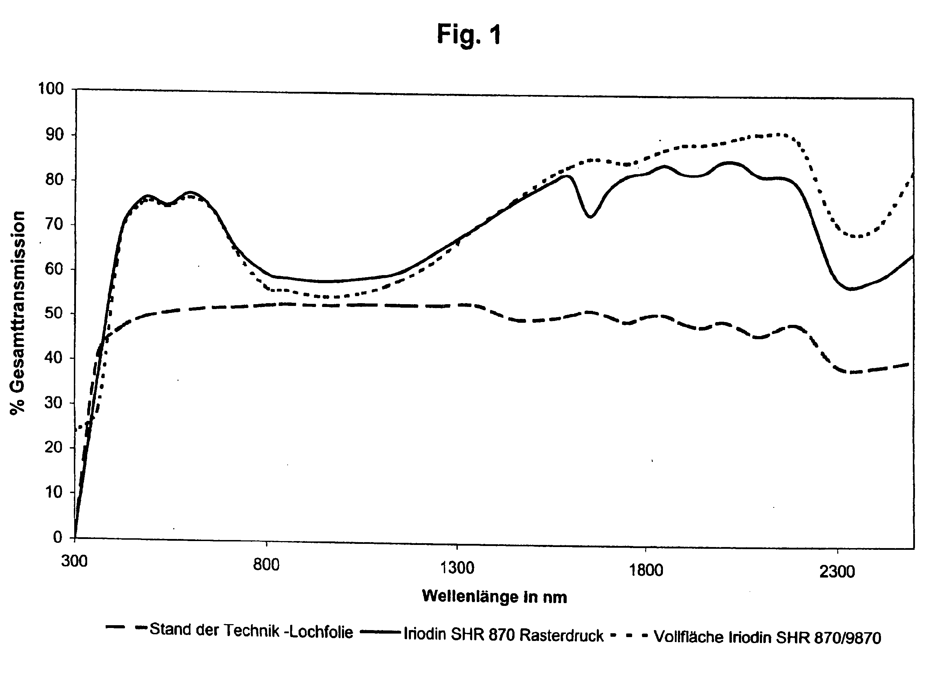

Ein Probestück der bedruckten Folie mit einer Größe von 5 x 5 cm wird anschließend mit einem Spektralphotometer vom Typ Lambda 900 mit Integrationskugel (150 mm) der Fa. Perkin- Elmer in Transmissionsposition spektral vermessen. Dabei wird die Transmission im Bereich von ca. 300 bis ca. 2500 nm des solaren Spektrums untersucht. Das Ergebnis ist aus Figur 1 ersichtlich.

### Vergleichsbeispiel 1:

Eine extrudierte PE-Folie mit einer Dicke von 60 µm und einem Pigmentgehalt von 8% wird unter Verwendung von Iriodin® SHR 870/9870 als Pigment hergestellt. Der Bedeckungsgrad der Fläche beträgt hierbei 100%.

Anschließend wird ein Probestück mit einer Größe von 5 x 5 cm mit einem Spektralphotometer vom Typ Lambda 900 mit Integrationskugel (150 mm) der Fa. Perkin- Elmer in Transmissionsposition spektral vermessen. Das Ergebnis ist in Figur 1 dargestellt.

### Vergleichsbeispiel 2:

Ein Probestück mit einer Größe von 5 x 5 cm einer handelsüblichen pigmentierten Lochfolie der Fa. 3M (Avery® perforierte Fensterfolie 6551, Dicke etwa 200 µm, schwarze Rückseite, Frontseite bedruckbar, Lochgröße 1,5 mm, Bedeckungsgrad der Fläche 50 %) wird mit einem Spektralphotometer vom Typ Lambda 900 mit Integrationskugel (150 mm) der Fa. Perkin- Elmer in Transmissionsposition spektral vermessen. Das Ergebnis ist in Figur 1 dargestellt.

Ein Vergleich der Transmissionskurven von Beispiel 1 und den Vergleichsbeispielen 1 und 2 in Figur 1 zeigt, dass die handelsübliche Lochfolie aus Vergleichsbeispiel 2 Transmissionswerte von ca. 50% über das gesamte solare Spektrum aufweist. Damit wird keine Selektivität bei der Abschirmung gegen Strahlung im NIR- Bereich erreicht. Da die Folie perforiert ist, ist sie in einem gewissem Grade blickdurchlässig.

Die Folie gemäß Vergleichsbeispiel 1 weist durch die Einarbeitung eines geeigneten Pigmentes eine selektive Abschirmung von NIR- Strahlung auf. Im sichtbaren Spektralbereich kann eine hohe Transmission erhalten werden. Der solare Transmissionsgrad beträgt 67%, der Lichttransmissionsgrad 76%. Damit ergibt sich eine Selektivitätskennzahl von 1,13 bezüglich der Solarstrahlung. Da die Pigmentierung der Folie vollflächig ist, tritt jedoch ein sogenannter Milchglaseffekt auf, welcher ein Hindurchsehen durch die Folie erschwert bzw. unmöglich macht.

Das erfindungsgemäße infrarot reflektierende Material gemäß Beispiel 1 zeigt trotz des Bedeckungsgrades von nur 50% dieselbe Selektivität gegenüber auftreffender Solarstrahlung wie die Folie gemäß Vergleichsbeispiel 1. Auch hier wird ein solarer Transmissionsgrad von 67% und ein Licht-Transmissionsgrad von 76% erhalten, was eine Selektivitätskennzahl von 1,13 ergibt.
Da nur 50% der Folienoberfläche mit der pigmenthaltigen Beschichtung bedeckt sind, kann der Betrachter jedoch ohne Probleme durch die Folie hindurchsehen.

### Beispiel 2:

Aus einem Gemisch aus 85 Gew. % eines lösemittelhaltigen, für den Siebdruck geeigneten Bindemittels (PLN/093 der Fa. Pröll, Weißenburg) und 15 Gew. % Iriodin® SHR 875/9875 (Verkaufsprodukt der Fa. Merck KGaA, Darmstadt) wird eine Siebdruckfarbe hergestellt, welche mit einer Flachbett-Siebdruckmaschine der Fa. Atma über ein 52T Flachbettsieb auf eine PET-Folie gedruckt wird. Über ein Punkteraster wird dabei ein Bedeckungsgrad der Fläche von 50% eingestellt.

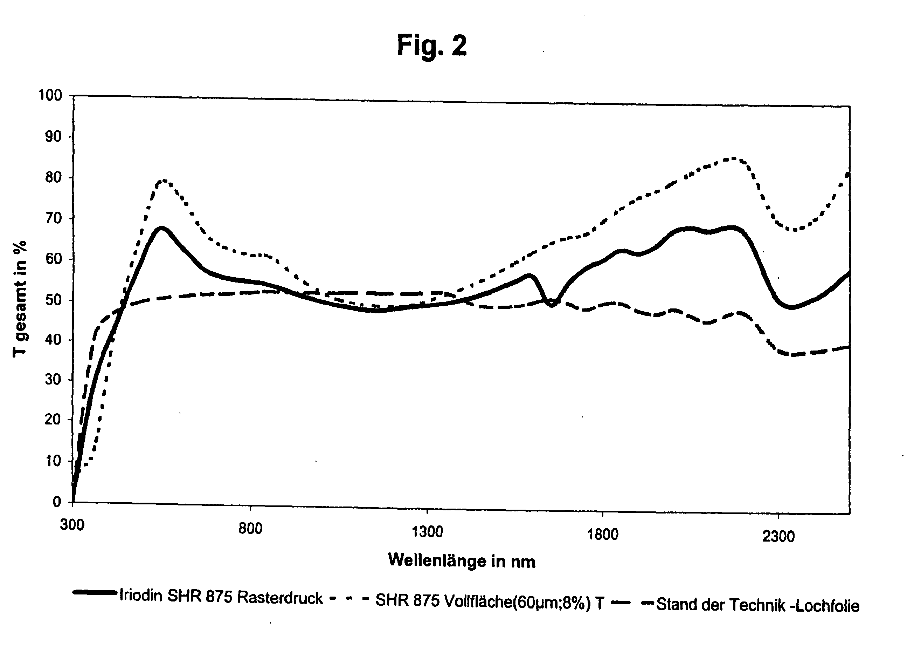

Ein Probestück der bedruckten Folie mit einer Größe von 5 x 5 cm wird anschließend mit einem Spektralphotometer vom Typ Lambda 900 mit Integrationskugel (150 mm) der Fa. Perkin- Elmer in Transmissionsposition spektral vermessen. Dabei wird die Transmission im Bereich von ca. 300 bis ca. 2500 nm des solaren Spektrums untersucht. Das Ergebnis ist aus Figur 2 ersichtlich.

### Vergleichsbeispiel 3:

Eine extrudierte PE-Folie mit einer Dicke von 60 µm und einem Pigmentgehalt von 8% wird unter Verwendung von Iriodin® SHR 875/9875 als Pigment hergestellt. Der Bedeckungsgrad der Fläche beträgt hierbei 100%.

Anschließend wird ein Probestück mit einer Größe von 5 x 5 cm mit einem Spektralphotometer vom Typ Lambda 900 mit Integrationskugel (150 mm) der Fa. Perkin- Elmer in Transmissionsposition spektral vermessen. Das Ergebnis ist in Figur 2 dargestellt.

### Vergleichsbeispiel 4:

Ein Probestück mit einer Größe von 5 x 5 cm einer handelsüblichen pigmentierten Lochfolie der Fa. 3M (Avery® perforierte Fensterfolie 6551, Dicke etwa 200 µm, schwarze Rückseite, Frontseite bedruckbar, Lochgröße 1,5 mm, Bedeckungsgrad der Fläche 50 %) wird mit einem Spektralphotometer vom Typ Lambda 900 mit Integrationskugel (150 mm) der Fa. Perkin- Elmer in Transmissionsposition spektral vermessen. Das Ergebnis ist in Figur 2 dargestellt.

Ein Vergleich der Transmissionskurven von Beispiel 2 und den Vergleichsbeispielen 3 und 4 in Figur 2 zeigt, dass die handelsübliche Lochfolie aus Vergleichsbeispiel 4 Transmissionswerte von ca. 50% über das gesamte solare Spektrum aufweist. Damit wird keine Selektivität bei der Abschirmung gegen Strahlung im NIR- Bereich erreicht. Da die Folie perforiert ist, ist sie in einem gewissem Grade blickdurchlässig.

Die Folie gemäß Vergleichsbeispiel 3 weist durch die Einarbeitung eines geeigneten Pigmentes eine selektive Abschirmung von NIR- Strahlung auf. Im sichtbaren Spektralbereich kann eine hohe Transmission erhalten werden. Der solare Transmissionsgrad beträgt 60%, der Lichttransmissionsgrad 76%. Damit ergibt sich eine Selektivitätskennzahl von 1,27 gegenüber der Solarstrahlung. Damit ist in umbauten Räumen, die ganz oder teilweise von einer Folie gemäß Vergleichsbeispiel 3 abgedeckt werden, bei hohem Lichteinfall nur eine moderate Temperaturerhöhung zu erwarten. Da die Pigmentierung der Folie vollflächig ist, tritt jedoch ein sogenannter Milchglaseffekt auf, welcher ein Hindurchsehen durch die Folie erschwert bzw. unmöglich macht.

Das erfindungsgemäße infrarot reflektierende Material gemäß Beispiel 2 zeigt trotz des Bedeckungsgrades von nur 50% eine fast ebenso große Selektivität bei der Abschirmung der auftreffenden Solarstrahlung wie die Folie gemäß Vergleichsbeispiel 3. Es wird ein solarer Transmissionsgrad von 57% und ein Licht-Transmissionsgrad von 68% erhalten, was eine Selektivitätskennzahl gegenüber der Solarstrahlung von 1,19 ergibt. Auch hier tritt in umbauten Räumen, welche mit dem infrarot reflektierenden Material gemäß Beispiel 2 ganz oder teilweise bedeckt sind, eine mäßige Temperaturerhöhung bei gleichzeitig hohem Lichteinfall auf. Da nur 50% der Folienoberfläche mit der pigmenthaltigen Beschichtung bedeckt sind, kann der Betrachter jedoch ohne Probleme durch die Folie hindurchsehen und auf diese Weise Bewegungen und Formen außerhalb des umbauten Raumes wahrnehmen.

## Patentansprüche

1. Infrarot reflektierendes Material, umfassend ein transparentes flächiges Material, enthaltend mindestens ein Interferenzpigment, das im sichtbaren Bereich der Globalstrahlung eine höhere Transmission aufweist als im NIR Wellenlängenbereich von 780 bis 2500 nm, **dadurch gekennzeichnet, dass** das interferenzpigment lediglich auf einem Teil des flächigen Materials in einer Beschichtung mit einer Konzentration von 15-50 Gew.-%, bezogen auf das Gesamtgewicht der Beschichtung, oder nur in einem Teil des flächigen Materials in einer Konzentration von 5-30 Gew.-%, bezogen auf das Gesamtgewicht des Materials, enthalten ist

2. Material nach Anspruch 1, **dadurch gekennzeichnet, dass** das transparente flächige Material aus Glas oder Kunststoff besteht.

3. Material nach Anspruch 1 oder 2, **dadurch gekennzeichnet, dass** das Interferenzpigment in einer Beschichtung auf dem transparenten flächigen Material vorliegt welche zusätzlich mindestens ein Bindemittel enthält.

4. Material nach Anspruch 1, **dadurch gekennzeichnet, dass** das transparente flächige Material eine Kunststofffolie ist und das Interferenzpigment in diese eingearbeitet ist.

5. Material nach einem der Ansprüche 1 bis 4, **dadurch gekennzeichnet, dass** das Interferenzpigment auf 30-80 %, bezogen auf die Gesamtfläche, des transparenten flächigen Materials enthalten ist, was einem Bedeckungsgrad der Gesamtfläche von 30-80 % entspricht.

6. Material nach einem oder mehreren der Ansprüche 1 bis 3 und 5, **dadurch gekennzeichnet, dass** der Teil der transparenten Fläche, welcher von der Beschichtung bedeckt ist, gleichmäßig über die Gesamtfläche verteilt ist.

7. Material nach Anspruch 6, **dadurch gekennzeichnet, dass** die bedeckten Flächen in Form von Punkten, Strichen, grafischen Mustern, alphanumerischen Zeichen oder in unregelmäßigen Flächenformen vorliegen.

8. Material nach einem oder mehreren der Ansprüche 1 bis 5. **dadurch gekennzeichnet, dass** das transparente flächige Material perforiert Ist und die Perforation gleichmäßig über die Gesamtfläche verteilt ist.

9. Material nach einem der Ansprüche 1 bis 8, **dadurch gekennzeichnet, dass** das Interferenzpigment ein- oder mehrschichtig ist.

10. Material nach Anspruch 9, **dadurch gekennzeichnet, dass** das einschichtige Interferenzpigment einen Schichtaufbau mit der Schichtfolge Glimmer - Titandioxid besitzt.

11. Material nach Anspruch 9, **dadurch gekennzeichnet, dass** das mehrschichtige Interferenzpigment einen Schichtaufbau mit der Schichtfolge Glimmer - Titandioxid - Siliziumdioxid - Titandioxid besitzt.

12. Verfahren zur Abschirmung eines umbauten Raumes gegen Infrarot-Licht, wobei für einfallendes Licht transparente Flächen des Raumes mit einem infrarot reflektierenden Material versehen werden, **dadurch gekennzeichnet, dass** eine Beschichtung, welche mindestens ein Interferenzpigment enthält, das im sichtbaren Bereich der Globalstrahlung eine höhere Transmission aufweist als im NIR Wellenlängenbereich von 780 bis 2500 nm, auf einen Teil der für einfallendes Licht transparenten Fläche des Raumes aufgebracht wird und die Beschichtung aus dem genannten Interferenzpigment in einer Konzentration von 15-50 Gew.%, bezogen auf das Gesamtgewicht der Beschichtung, und mindestens einem Bindemittel besteht oder aus einem transparenten flächigen Kunststoff besteht, welcher das genannte Interferenzpigment in einer Konzentration von 15-50 Gew.%, bezogen auf das Gesamtgewicht der Schicht, in einer Schicht auf einem Teil seiner Oberfläche enthält oder aus einem transparenten flächigen Kunststoff besteht, in welchen das genannte Interferenzpigment in einer Konzentration von 5-30 Gew. %, bezogen auf das Gesamtgewicht des Materials, eingearbeitet ist und der mit flächigen Aussparungen versehen ist.

13. Verfahren nach Anspruch 12, **dadurch gekennzeichnet, dass** die Beschichtung aus dem genannten Interferenzpigment und mindestens einem Bindemittel besteht und im Druckverfahren aufgebracht wird.

14. Verfahren nach Anspruch 12, **dadurch gekennzeichnet, dass** die Beschichtung aus einem transparenten flächigen Kunststoff besteht, welcher das genannte Interferenzpigment in einer Schicht auf einem Teil seiner Oberfläche enthält, die im Druckverfahren aufgebracht wird.

15. Verfahren nach Anspruch 13 oder 14, **dadurch gekennzeichnet, dass** das Druckverfahren ein Siebdruckverfahren ist.

16. Verwendung des infrarot reflektierenden Materials gemäß den Ansprüche 1 bis 11 für Gebäude, Fahrzeuge und Gewächshäuser.

## Claims

1. Infrared-reflective material comprising a transparent sheet-like material comprising at least one interference pigment which has higher transmission in the visible region of global radiation than in the NIR wavelength range from 780 to 2500 nm, **characterised in that** the interference pigment is present merely on part of the sheet-like material in a coating with a concentration of 15-50% by weight, based on the total weight of the coating, or only in part of the sheet-like material in a concentration of 5-30% by weight, based on the total weight of the material.

2. Material according to Claim 1, **characterised in that** the transparent sheet-like material consists of glass or plastic.

3. Material according to Claim 1 or 2, **characterised in that** the interference pigment is present in a coating on the transparent sheet-like material which, in addition, comprises at least one binder.

4. Material according to Claim 1, **characterised in that** the transparent sheet-like material is a plastic film, and the interference pigment is incorporated into the latter.

5. Material according to one of Claims 1 to 4, **characterised in that** the interference pigment is present on 30-80%, based on the total surface area, of the transparent sheet-like material, which corresponds to a degree of coverage of the total surface area of 30-80%.

6. Material according to one or more of Claims 1 to 3 and 5, **characterised in that** the part of the transparent surface which is covered by the coating is uniformly distributed over the entire surface.

7. Material according to Claim 6, **characterised in that** the covered areas are in the form of dots, lines, graphic patterns, alphanumeric symbols or in irregular area shapes.

8. Material according to one or more of Claims 1 to 5, **characterised in that** the transparent sheet-like material is perforated, and the perforation is uniformly distributed over the entire surface.

9. Material according to one of Claims 1 to 8, **characterised in that** the interference pigment is single- or multilayered.

10. Material according to Claim 9, **characterised in that** the single-layered interference pigment has a layer structure with the layer sequence mica - titanium dioxide.

11. Material according to Claim 9, **characterised in that** the multilayered interference pigment has a layer structure with the layer sequence mica - titanium dioxide - silicon dioxide - titanium dioxide.

12. Method for screening an enclosed area against infrared light, where surfaces of the area which are transparent to incident light are provided with an infrared-reflective material, **characterised in that** a coating which comprises at least one interference pigment which has higher transmission in the visible region of global radiation than in the NIR wavelength range from 780 to 2500 nm is applied to part of the surface of the area which is transparent to incident light, and the coating consists of the said interference pigment in a concentration of 15-50% by weight, based on the total weight of the coating, and at least one binder or consists of a transparent sheet-like plastic which comprises the said interference pigment in a concentration of 15-50% by weight, based on the total weight of the layer, in a layer on part of its surface or consists of a transparent sheet-like plastic into which the said interference pigment has been incorporated in a concentration of 5-30% by weight, based on the total weight of the material, and which is provided with shallow recesses.

13. Method according to Claim 12, **characterised in that** the coating consists of the said interference pigment and at least one binder and is applied by a printing process.

14. Method according to Claim 12, **characterised in that** the coating consists of a transparent sheet-like plastic which comprises the said interference pigment applied in a layer to part of its surface by a printing process.

15. Method according to Claim 13 or 14, **characterised in that** the printing process is a screen-printing process.

16. Use of the infrared-reflective material according to Claims 1 to 11 for buildings, vehicles and greenhouses.

## Revendications

1. Matériau réfléchissant les infrarouges comprenant un matériau sous forme de feuille transparente comprenant au moins un pigment d'interférence qui présente une transmission plus élevée dans la région visible du rayonnement global que dans la plage de longueurs d'onde NIR de 780 à 2500 nm, **caractérisé en ce que** le pigment d'interférence est présent simplement sur une partie du matériau sous forme de feuille dans un revêtement selon une concentration de 15-50 % en poids, sur la base du poids total du revêtement ou seulement dans une partie du matériau sous forme de feuille selon une concentration de 5-30 % en poids, sur la base du poids total du matériau.

2. Matériau selon la revendication 1, **caractérisé en ce que** le matériau sous forme de feuille transparente est constitué par du verre ou du plastique.

3. Matériau selon la revendication 1 ou 2, **caractérisé en ce que** le pigment d'interférence est présent dans un revêtement sur le matériau sous forme de feuille transparente et le revêtement comprend en outre au moins un liant.

4. Matériau selon la revendication 1, **caractérisé en ce que** le matériau sous forme de feuille transparent est un film en plastique, et le pigment d'interférence est incorporé dans ce dernier.

5. Matériau selon l'une des revendications 1 à 4, **caractérisé en ce que** le pigment d'interférence est présent selon 30-80%, sur la base de l'aire de surface totale du matériau sous forme de feuille transparente, ce qui correspond à un degré de recouvrement de l'aire de surface totale de 30-80%.

6. Matériau selon une ou plusieurs des revendications 1 à 3 et 5, **caractérisé en ce que** la partie de la surface transparente qui est recouverte par le revêtement est distribuée de manière uniforme sur la totalité de la surface.

7. Matériau selon la revendication 6, **caractérisé en ce que** les aires recouvertes sont selon la forme de points, de lignes, de motifs graphiques, de symboles alphanumériques ou selon des formes d'aires irrégulières.

8. Matériau selon une ou plusieurs des revendications 1 à 5, **caractérisé en ce que** le matériau sous forme de feuille transparente est perforé, et la perforation est distribuée de manière uniforme sur la totalité de la surface.

9. Matériau selon l'une des revendications 1 à 8, **caractérisé en ce que** le pigment d'interférence est monocouche ou multicouche.

10. Matériau selon la revendication 9, **caractérisé en ce que** le pigment d'interférence monocouche présente une structure en couches moyennant la séquence de couches mica-dioxyde de titane.

11. Matériau selon la revendication 9, **caractérisé en ce que** le pigment d'interférence multicouche présente une structure en couches moyennant la séquence de couches mica-dioxyde de titane-dioxyde de silicium-dioxyde de titane.

12. Procédé pour former écran pour une aire renfermée vis-à-vis d'une lumière infrarouge, où des surfaces de l'aire qui sont transparentes à une lumière incidente sont munies d'un matériau réfléchissant les infrarouges, **caractérisé en ce qu'**un revêtement qui comprend au moins un pigment d'interférence qui présente une transmission plus élevée dans la région visible du rayonnement global que dans la plage de longueurs d'onde NIR de 780 à 2500 nm est appliqué sur une partie de la surface de l'aire qui est transparente à la lumière incidente, et le revêtement est constitué par ledit pigment d'interférence selon une concentration de 15-50 % en poids, sur la base du poids total du revêtement, et par au moins un liant ou est constitué par un plastique sous forme de feuille transparente qui comprend ledit pigment d'interférence selon une concentration de 15-50% en poids, sur la base du poids total de la couche, dans une couche, sur une partie de sa surface ou est constitué par un plastique sous forme de feuille transparente à l'intérieur duquel ledit pigment d'interférence a été incorporé selon une concentration de 5-30% en poids, sur la base du poids total du matériau, et qui est muni d'évidements peu profonds.

13. Procédé selon la revendication 12, **caractérisé en ce que** le revêtement est constitué par ledit pigment d'interférence et par au moins un liant et est appliqué au moyen d'un processus d'impression.

14. Procédé selon la revendication 12, **caractérisé en ce que** le revêtement est constitué par un plastique sous forme de feuille transparente qui comprend ledit pigment d'interférence qui est appliqué selon une couche sur une partie de sa surface au moyen d'un processus d'impression.

15. Procédé selon la revendication 13 ou 14, **caractérisé en ce que** le processus d'impression est un processus d'impression par écran.

16. Utilisation du matériau réfléchissant les infrarouges selon les revendications 1 à 11 pour des immeubles, des véhicules et des serres.
